# EUROPÄISCHE PATENTSCHRIFT

(11) **EP 2 116 748 B1**
(45) Veröffentlichungstag und Bekanntmachung des Hinweises auf die Patenterteilung: **15.06.2011**
(21) Anmeldenummer: 09005975.9
(22) Anmeldetag: 30.04.2009
(51) Int. Cl.: F16K 11/078

(54) **Sanitärarmatur**
Sanitary fittings
Armature sanitaire

(30) Priorität: 06.05.2008 DE 102008022410
(43) Veröffentlichungstag der Anmeldung: 11.11.2009
(73) Patentinhaber: Grohe AG, 58675 Hemer (DE)
(72) Erfinder: Begerow, Ralf, 58675 Hemer (DE)

(56) Entgegenhaltungen:
- DE-A1- 2 630 207
- DE-A1- 4 443 123
- US-A- 5 375 624
- US-A1- 2003 173 410

## Beschreibung

Die vorliegende Erfindung betrifft eine Sanitärarmatur gemäß dem Oberbegriff des Patentanspruchs 1.

In den Gehäusen sanitärer Armaturen, insbesondere in Einhebelmischem, sind üblicherweise Mischventile angeordnet, mit deren von Hand bedienbaren Steuerhebel der Durchfluss des Wassers durch die Armatur kontrolliert werden kann. Die Mischventile weisen dabei eine ortsfest gehaltene Ventilsitzscheibe und eine durch den Steuerhebel verstellbare Steuerscheibe auf, mittels der durch Drehung des Steuerhebels das Mischungsverhältnis und durch Verschieben die Durchflussmenge des Mischwassers reguliert werden.
Aus der DE 100 06 375 A1 ist ein derartiges Mischventil bekannt. Der Steuerhebel des Mischventils ist drehbar gelagert und greift mit seinem unteren Ende in die Vertiefung eines Mitnehmerteils ein, das die bewegliche Steuerscheibe umgibt und diese führt. Das untere Ende des Steuerhebels bewegt sich dabei auf einer Kreisbahn um die Lagerachse. Dabei kommt es zwangsläufig zu einer geringfügigen vertikalen Verschiebung des unteren Endes des Steuerhebels gegenüber der Vertiefung, was durch eine entsprechende Geometrie der Vertiefung im Mitnehmerteil ausgeglichen wird.
Zur Bedienung des Steuerhebels ist üblicherweise ein Betätigungsgriff an dem Steuerhebels befestigt.

Die DE 196 02 161 A1 zeigt eine Sanitärarmatur und unterschiedliche Verbindungselemente zur Befestigung eines Betätigungsgriffes an dem Steuerhebel auf. Damit der Steuerhebel ungehindert bewegt werden kann, muss die Geometrie des Betätigungsgriffes so auf das Gehäuse der Sanitärarmatur abgestimmt sein, dass der Steuerhebel im Rahmen der durch das Mischventil vorgegebenen Dreh- und Öffnungswinkel für die Dreh- und Schwenkbewegung ungehindert bewegt werden kann. Dazu sind die Betätigungsgriffe beispielsweise haubenartig ausgebildet, so dass sie das Gehäuse der Armatur überdecken.
Die DE 90 12 682 U1 wiederum zeigt eine Armatur mit einem Betätigungsgriff, dessen untere dem Gehäuse zugewandte Seite einseitig abgeschrägt ist, damit die Schwenkbewegung des Betätigungsgriffes und des mit diesem verbundenen Steuerhebels im vorgesehen Rahmen ermöglicht wird, ohne mit dem Gehäuse zu kollidieren oder Schleifspuren hervorzurufen.

Hierdurch wird deutlich, dass die Gestaltung der Armatur oder deren Geometrie üblicherweise an die Funktionsweise und den Schwenkwinkel des Mischventils angepasst werden muss.
Der Erfindung liegt die Aufgabe zugrunde, diesen Nachteil zu beheben.

Die US 5375624 A zeigt eine Armatur mit einem exzentrisch gelagerten Stellhebel gemäß dem Oberbegriff des Patentanspruchs 1.

Mit der Erfindung wird eine Sanitärarmatur mit einem Gehäuse, einem in einem Ventilgehäuse angeordneten Mischventil mit einer festsitzenden Ventilscheibe, die Wasserdurchtrittsöffnungen für Kalt-, Warm- und Mischwasser aufweist, und einer beweglichen Steuerscheibe, durch deren ebene Bewegung auf der Ventilsitzscheibe das Mischverhältnis und die Auslaufmenge des Mischwassers eingestellt werden, bereitgestellt. Zur Bedienung der beweglichen Steuerscheibe ist ein Stellhebel, der einerseits mit einem Betätigungsgriff und andererseits mit der Steuerscheibe verbunden ist, vorgesehen, wobei die Steuerscheibe bei einer Schwenkbewegung des Betätigungsgriffs und des Stellhebels um eine waagerechte Achse eine translatorische Bewegung und bei einer Drehbewegung des Betätigungsgriffs um eine Längsachse des Ventilgehäuses eine Rotationsbewegung erfährt. Hierbei führt der Stellhebel und somit der Betätigungsgriff bei einer Schwenkbewegung um die waagrechte Achse oder zusätzlich zu der Schwenkbewegung eine definierte Bewegung in vertikaler Richtung relativ zum Mischventil aus. Diese ist nicht zwangsläufig durch den Abstand zwischen Drehpunkt und unterem Ende des Stellhebels vorgegeben, sondern entsprechend der Gehäusegeometrie und dem damit notwenigen Abstand des Betätigungshebels zum Gehäuse bestimmt. Bei der Schwenkbewegung des Stellhebels, bei der die bewegliche Steuerscheibe aus einer Schließ- in eine Öffnungsposition des Mischventils verschoben wird, vollzieht der Stellhebel und somit der Betätigungsgriff eine definierte Hubbewegung und/oder translatorische Bewegung relativ zum Mischventil, die so bemessen ist, dass die unteren Kanten des Betätigungsgriffs nicht mit dem Sanitärarmaturengehäuse kollidieren.

Es ist die waagerechte Achse, um die sich der Stellhebel bei der Schwenkbewegung dreht, versetzt zur Mittelachse des Stellhebels und versetzt zur Mittelachse des Ventilgehäuses angeordnet. Dadurch ist der Stellhebel asymmetrisch gelagert.

Eine weitere Ausgestaltung der Erfindung sieht vor, dass die waagerechte Achse, um die sich der Stellhebel bei der Schwenkbewegung dreht, an dem der Steuerscheibe zugewandten Ende des Stellhebels angeordnet ist. Beim Verschieben der Steuerscheibe wird daher auch die Drehachse translatorisch bewegt. Dazu ist der Stellhebel drehbar, aber fest mit der Steuerscheibe verbunden, so dass die vertikale Verschiebung des Stellhebels nicht an der Lagerstelle aufgenommen werden kann. Daher ist am Stellhebel oder am Ventilgehäuse eine Einrichtung zum Ausgleich der axialen Bewegung vorgesehen. Diese kann als Langloch, Schlitz oder Nut ausgeführt sein. Zur Führung des Stellhebels ist beispielsweise in der Mischkartusche ein Führungsstift angeordnet, der mit dem Langloch, dem Schlitz oder der Nut am Stellhebel zusammenwirkt.

Eine weitere Ausgestaltung der Erfindung sieht vor, dass der Stellhebel teleskopierbar ist. Dazu ist er mindestens zweiteilig ausgeführt, wobei die beiden oder mehr Teile verschieblich ineinander geführt sind.

Im Folgenden wird die Erfindung durch einige Ausführungsbeispiele anhand zeichnerischer Darstellung näher erläutert.

Dabei zeigen
- Figur 1: einen Schnitt durch eine erste Sanitärarmatur mit geschlosse- nem Mischventil
- Figur 2: einen Schnitt durch eine erste Sanitärarmatur mit geöffnetem Mischventil
- Figur 3: einen Schnitt durch eine zweite Sanitärarmatur mit geschlos- senem Mischventil
- Figur 4: einen Schnitt durch eine zweite Sanitärarmatur mit geöffnetem Mischventil

Durch die in den Figuren dargestellten Ausführungsbeispiele einer Sanitärarmatur soll die Gestaltungsmöglichkeit von Sanitärarmaturen erweitert werden. Weiterhin soll vermieden werden, dass die Gehäuse und Geometrie der Sanitärarmaturen an die Funktionsweise des Mischventils angepasst werden müssen.

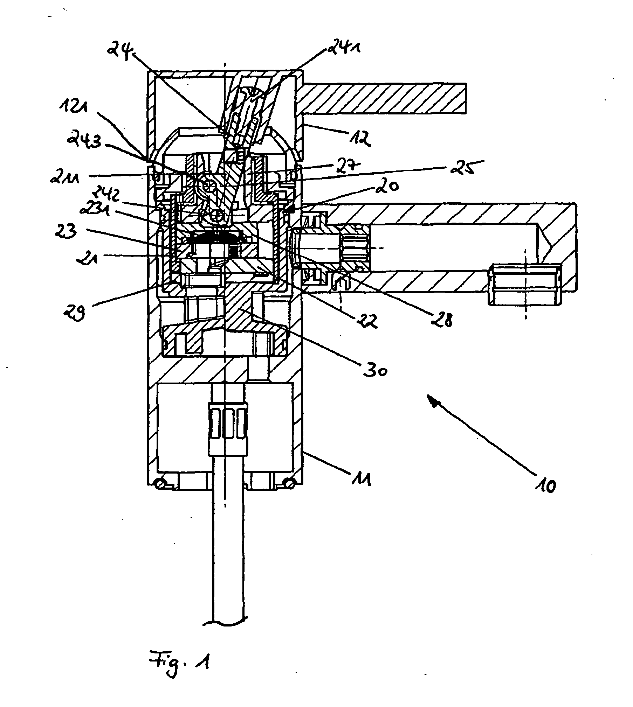

Die Figuren 1 bis 4 zeigen eine Sanitärarmatur 10 mit einem zylindrischen Gehäuse 11 und einem Betätigungsgriff 12 mit einem ebenfalls zylindrischen Grundkörper, an dem ein zylindrisches Griffstück angeformt ist.
Im Innern des Gehäuses 11 befindet sich ein Kunststoffeinsatz 30, der wiederum eine Aufnahme für ein Mischventil 20 enthält. Das Mischventil 20 ist in der üblichen Kartuschenbauweise ausgeführt, so dass es als Ganzes in den Kunststoffeinsatz 30 eingebaut werden kann.

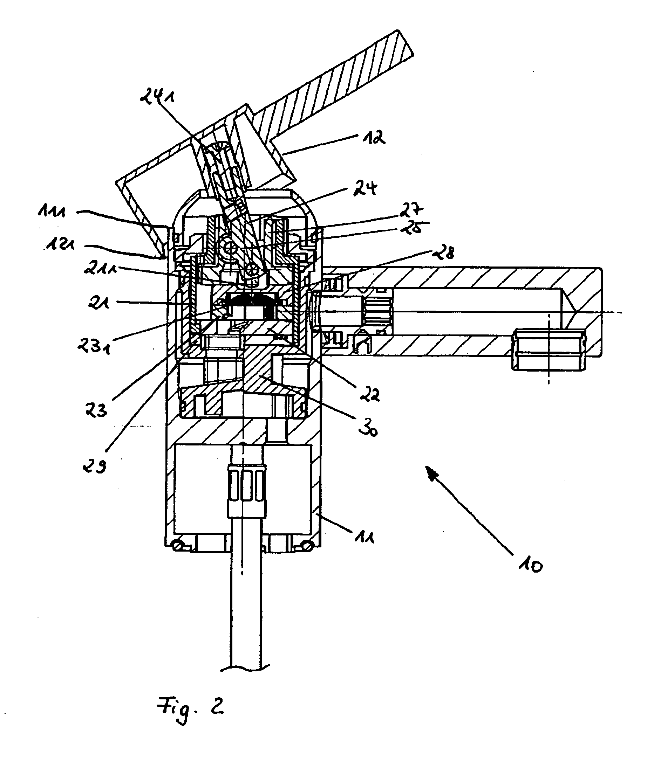

Das Mischventil 20 besteht im Wesentlichen aus einem Gehäuse 21, dessen Unterseite in Form eines Dichteinsatzes 29 zum Anschluss an die wasserführenden Kanäle im Kunststoffeinsatz 30 ausgebildet ist. An den Dichteinsatz 29 schließt eine festsitzende Ventilsitzscheibe 22 an. Die Ventilsitzscheibe 22 weist Wasserdurchtrittsöffnungen für kaltes und heißes Wasser sowie eine Wasserdurchtrittsöffnung für Mischwasser auf.
Oberhalb der Ventilsitzscheibe 22 befindet sich die bewegliche Steuerscheibe 23, in deren Öffnung ein Geräuschdämpfer 231 angeordnet ist. Um die Steuerscheibe 23 auf der Ventilsitzscheibe 22 translatorisch bewegen zu können, ist ein Mitnehmer 28 mit Nocken vorgesehen, die in dafür vorgesehene Ausnehmungen in der Steuerscheibe 23 eingreifen.
Der Mitnehmer 28 wird durch einen Stellhebel 24 bewegt, der drehfest, aber um eine waagrechte Achse 25 schwenkbar, in einem Rotationskörper 27 befestigt ist.
Zur Befestigung des Stellhebels 24 sind zwei Kerbstifte 242, 243 senkrecht zur Mittelachse 241 des Stellhebels 24 angeordnet. Der untere Kerbstift 242 lagert höhenverschieblich in einer Lagermulde im Mitnehmer 28.
Der obere Kerbstift 243 dient als Schwenkachse und ist im Gehäuse des Rotationskörpers 27 gelagert.
Bei einer Schwenkbewegung des Stellhebels 24 um die waagrechte Achse 25 drückt oder zieht der untere Kerbstift 242 den Mitnehmer 28 in eine bestimmte Richtung, so dass die Steuerscheibe 23 auf der Ventilsitzscheibe 22 verschoben wird. Beim Hochziehen des Betätigungsgriffs 12 wird die Steuerscheibe 23 derart verschoben, dass sie die Wasserdurchtrittsöffnungen ganz oder teilweise frei gibt, so dass Wasser durch die Armatur strömt.
Durch eine Drehung des Betätigungsgriffs 12 um eine vertikale Achse 211 des Mischventils 20 wird über den Stellhebel 24 der Rotationskörper 27 verdreht, der wiederum drehfest mit dem Mitnehmer 28 verbunden ist. Bei einer Drehung des Mitnehmers 28 führt die Steuerscheibe 23 ebenfalls eine Rotationsbewegung aus und gibt dabei bei der einen der Wasserdurchtrittsöffnungen einen größeren Bereich frei während bei der anderen die Durchtrittsöffnung verkleinert wird, so dass das Mischverhältnis von Kalt- und Heißwasser verändert wird.
Im Gegensatz zu üblichen Mischventilen ist die waagrechte Achse 25 des Stellhebels 24 bei der Sanitärarmatur in Figur 1 und 2 nicht symmetrisch, sondern versetzt zur Mittelachse 241 des Stellhebels 24 und versetzt zur Mittelachse 211 des Mischventils 20 gelagert. Durch den Versatz der Drehachse des Stellhebels 24 wird die Bewegung, die der Stellhebel 24 und somit der Betätigungsgriff 12 in vertikaler Richtung relativ zum Mischventil 20 ausführt, verändert.
Aus Figur 2 wird deutlich, dass der Hub, der Abstand eines Punktes in vertikaler Richtung in der geöffneten Position gegenüber der Ausgangsposition in Figur 1, ausreicht, um die untere Kante des Betätigungsgriffs 121 über die obere Kante 111 des Sanitärarmaturengehäuses 11 zu heben, so dass Betätigungsgriff 12 und Gehäuse 11 nicht miteinander kollidieren.

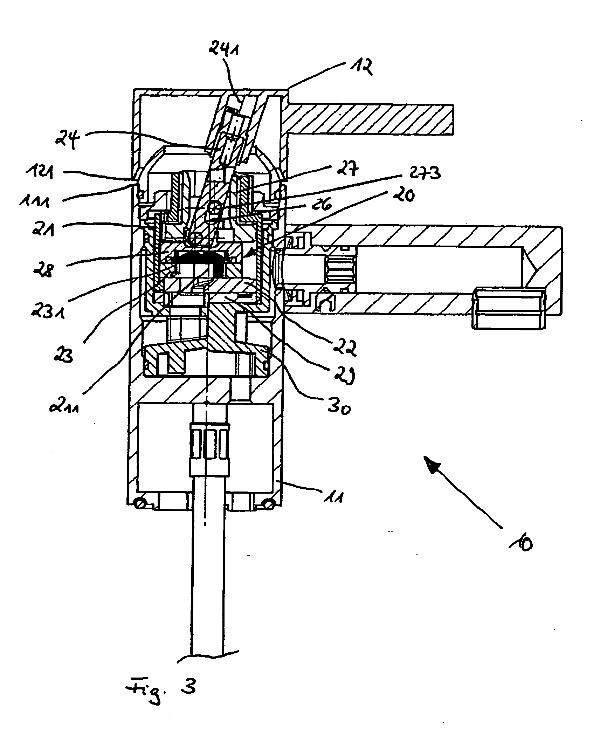

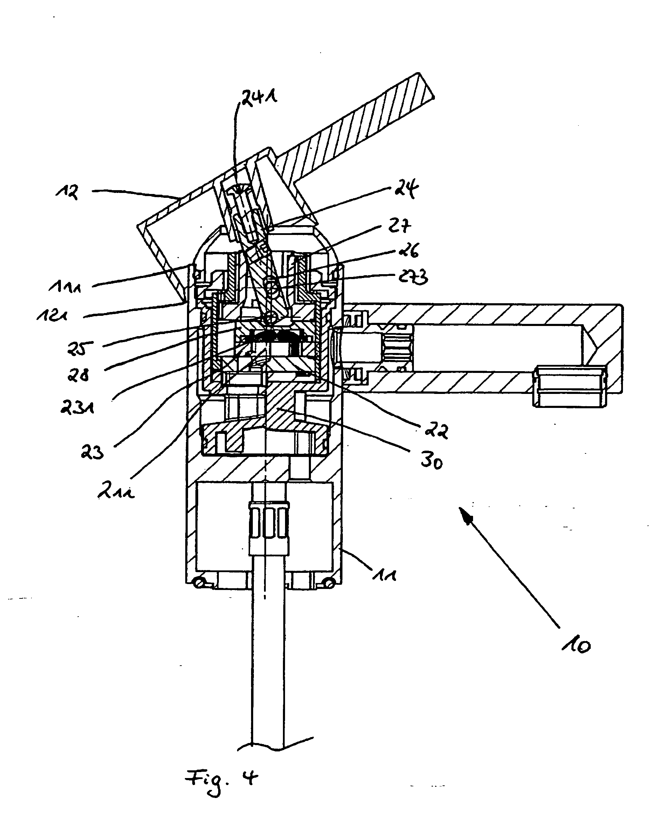

Figur 3 und Figur 4 zeigen eine weitere Ausführungsform der Erfindung. Im Gegensatz zur Ausführungsform in den Figuren 1 oder 2 ist der Stellhebel 24 an seinem unteren Ende drehbar, aber fest mit dem Mitnehmer 28 und somit mit der beweglichen Steuerscheibe 23 verbunden. Auch hier ist die Schwenkachse versetzt zur Mittelachse 241 des Stellhebels 24 angeordnet.
Um zu verhindern, dass Zugkräfte auf die Steuerscheibe 23 ausgeübt werden, wodurch die Dichtigkeit des Mischventils 20 beeinträchtigt werden könnte, ist am Stellhebel eine Einrichtung zum Ausgleich der Vertikalbewegung in Form eines Langlochs 26 und eines zugehörigen Führungsstifts 273 am Rotationskörper 27 vorgesehen.

### Bezugszeichenliste

- 10: Sanitärarmatur
- 11: Gehäuse
- 12: Betätigungsgriff
- 20: Mischventil
- 21: Mischventilgehäuse
- 211: Mittelachse
- 22: Ventilsitzscheibe
- 23: Steuerscheibe
- 231: Geräuschdämpfer
- 24: Stellhebel
- 241: Mittelachse Stellhebel
- 25: Waagerechte Achse (Schwenkachse)
- 26: Einrichtung zum Ausgleich der axialen Bewegung
- 27: Rotationskörper
- 273: Führungsstift
- 28: Mitnehmer
- 29: Dicht- und Führungsscheibe
- 30: Kunststoffeinsatz

## Patentansprüche

1. Sanitärarmatur (10) mit
- einem Gehäuse (11),
- einem in einem Ventilgehäuse (21) angeordneten Mischventil (20) mit
- - einer festsitzenden Ventilscheibe (22),
- - - die Wasserdurchtrittsöffnungen für Kalt-, Warm- und Mischwasser aufweist
- - einer beweglichen Steuerscheibe (23),
- - - durch deren ebene Bewegung auf der Ventilsitzscheibe (22) das Mischverhältnis und die Auslaufmenge des Mischwassers eingestellt werden,
- - einem Stellhebel (24),
- - - der einerseits mit einem Betätigungsgriff (12) und
- - - andererseits mit der Steuerscheibe (23) verbunden ist,
- - wobei die Steuerscheibe (23)
- - - bei einer Schwenkbewegung des Betätigungsgriffs (12) und des Stellhebels (24) um eine waagerechte Achse (25) eine translatorische Bewegung und,
- - - bei einer Drehbewegung des Betätigungsgriffs (12) um eine Längsachse des Ventilgehäuses (21) eine Rotationsbewegung erfährt, wobei
- die waagerechte Achse (25), um die sich der Stellhebel (24) bei der Schwenkbewegung dreht, versetzt zur Mittelachse (241) des Stellhebels (24)
angeordnet ist und
- der Stellhebel (24) und somit der Betätigungsgriff (12) bei der Schwenkbewegung oder zusätzlich zur Schwenkbewegung eine definierte Bewegung in vertikaler und/oder waagerechter Richtung relativ zum Mischventil (20) ausführt,
- **dadurch gekennzeichnet, dass** die waagerechte Achse (25) versetzt zur Mittelachse (211) des Ventilgehäuses (21) angeordnet ist.

2. Sanitärarmatur (10) nach Anspruch 1, bei der der Stellhebel (24) bei der Schwenkbewegung zum Verschieben der beweglichen Steuerscheibe (23) aus einer Schließ- in eine Öffnungsposition des Mischventils (20) eine definierte Hubbewegung vollzieht.

3. Sanitärarmatur (10) nach Anspruch 1 oder 2, bei der die waagerechte Achse (25), um die sich der Stellhebel (24) bei der Schwenkbewegung dreht, an dem der Steuerscheibe (23) zugewandten Ende des Stellhebels (24) angeordnet ist.

4. Sanitärarmatur (10) nach Anspruch 1 oder 3, bei der die waagerechte Achse (25) fest mit der Steuerscheibe (23) verbunden und an dem Stellhebel (24) oder an dem Ventilgehäuse (21) eine Einrichtung (26) zum Ausgleich der Bewegung in vertikaler Richtung vorgesehen ist.

5. Sanitärarmatur (10) nach Anspruch 4, bei der die Einrichtung (26) zum Ausgleich der Bewegung in vertikaler Richtung als Langloch, Schlitz, Nut oder Kulissenführung vorgesehen ist.

6. Sanitärarmatur (10) nach Anspruch 1 oder 2, bei dem der Stellhebel (24) teleskopierbar ist.

7. Sanitärarmatur (10) nach Anspruch 1 oder 2, bei der für die Schwenkbewegung an dem Mischventil (20) ein Lager für den Stellhebel (24) mit einem drehfest verbundenen senkrecht zur Mittelachse angeordneten Kerbstift vorgesehen ist, wobei der Kerbstift mit einem Nocken versehen ist.

## Claims

1. Sanitary fitting (10) having
- a housing (11),
- a mixing valve (20), arranged in a valve housing (21), with
- - a fixed valve disc (22),
- - - which has water passage openings for cold, hot and mixed water,
- - a movable control disc (23),
- - - the planar movement of which on the valve seat disc (22) sets the mixing ratio of the mixed water and the amount thereof discharged,
- - a control lever (24),
- - - which is connected at one end to an operating handle (12) and
- - - at the other end to the control disc (23),
- - the control disc (23)
- - - performing a translational movement when the operating handle (12) and the control lever (24) are pivoted about a horizontal shaft (25) and
- - - performing a rotational movement when the operating handle (12) is rotated about a longitudinal axis of the valve housing (21),
- wherein the horizontal shaft (25) about which the control lever (24) rotates during the pivoting movement is spaced from the centre axis (241) of the control lever (24) and,
- during the pivoting movement or in addition to the pivoting movement, the control lever (24) and accordingly the operating handle (12) performs a defined movement in the vertical and/or horizontal direction relative to the mixing valve (20),
**characterized in that**
the horizontal shaft (25) is spaced from the centre axis (211) of the valve housing (21).

2. Sanitary fitting (10) according to claim 1, wherein during the pivoting movement for displacement of the movable control disc (23) out of a closed position into an open position of the mixing valve (20) the control lever (24) carries out a defined stroke movement.

3. Sanitary fitting (10) according to claim 1 or 2, wherein the horizontal shaft (25) about which the control lever (24) rotates during the pivoting movement is arranged at the end of the control lever (24) that faces the control disc (23).

4. Sanitary fitting (10) according to claim 1 or 3, wherein the horizontal shaft (25) is rigidly connected to the control disc (23), and the control lever (24) or the valve housing (21) is provided with a device (26) for accommodating the movement in the vertical direction.

5. Sanitary fitting (10) according to claim 4, wherein the device (26) for accommodating the movement in the vertical direction is provided in the form of an oblong hole, a slot, a groove or slide guide means.

6. Sanitary fitting (10) according to claim 1 or 2, wherein the control lever (24) is telescopic.

7. Sanitary fitting (10) according to claim 1 or 2, wherein for the pivoting movement there is provided on the mixing valve (20) a bearing for the control lever (24) having a non-rotatable grooved pin arranged perpendicular to the centre axis, the grooved pin being provided with a lug.

## Revendications

1. Robinet sanitaire (10) comprenant :
- un boîtier (11),
- une soupape mélangeuse (20) installée dans un boîtier de soupape (2 1) et ayant,
** un disque de soupape fixe (22),
*** avec des orifices de passage pour l'eau froide, l'eau chaude et l'eau mélangée,
** un disque de commande (23), mobile,
*** dont le mouvement sur le disque formant siège de soupape (22) règle le rapport de mélange et le débit d'eau mélangée,
** un levier de réglage (24),
*** relié d'un côté à une poignée d'actionnement (12), et
*** de l'autre au disque de commande (23),
** le disque de commande (23) subissant,
*** un mouvement de translation pour un mouvement de pivotement de la poignée d'actionnement (12) et du levier de réglage (24) autour d'un axe horizontal (25), et
*** un mouvement de rotation sous l'effet d'un mouvement de rotation de la poignée d'actionnement (12) autour d'un axe longitudinal du boîtier de soupape (21),
robinet dans lequel
- l'axe horizontal (25) autour duquel le levier d'actionnement (24) tourne lors de son mouvement de pivotement est décalé par rapport à l'axe (241) du levier d'actionnement (24), et
- le levier d'actionnement (24) et ainsi sous l'effet du mouvement de pivotement ou en plus du mouvement de pivotement, la poignée de manoeuvre (12) effectue un mouvement défini dans la direction verticale et/ou la direction horizontale par rapport à la soupape de mélange (20),
robinet **caractérisé en ce que**
l'axe horizontal (25) est décalé par rapport à l'axe (211) du boîtier de soupape (21).

2. Robinet sanitaire (10) selon la revendication 1,
selon lequel
le levier de réglage (24) exécute un mouvement de course défini lors du mouvement de pivotement pour coulisser le disque de commande mobile (23) à partir de la position de fermeture dans une position d'ouverture de la soupape de mélange (20).

3. Robinet sanitaire (10) selon la revendication 1 ou 2,
selon lequel
l'axe horizontal (25) autour duquel tourne le levier de réglage (24) dans son mouvement de pivotement, est prévu sur l'extrémité du levier de réglage (24) tournée vers le disque de commande (23).

4. Robinet sanitaire (10) selon la revendication 1 ou 3,
selon lequel
l'axe horizontal (25) est relié solidairement au disque de commande (23) et le levier de réglage (24) ou le boîtier de soupape (21) comportent une installation (26) pour compenser le mouvement dans la direction verticale.

5. Robinet sanitaire (10) selon la revendication 4,
selon lequel
l'installation (26) pour compenser le mouvement dans la direction verticale, est un trou oblong, une fente, une rainure ou un guidage par coulisse.

6. Robinet sanitaire (10) selon la revendication 1 ou 2,
selon lequel
le levier de réglage (24) est télescopique.

7. Robinet sanitaire (10) selon la revendication 1 ou 2,
selon lequel
la soupape de mélange (20) comporte un palier pour le levier de réglage (24) pour le mouvement de pivotement, avec une goupille cannelée, solidaire en rotation perpendiculaire à l'axe géométrique et la goupille cannelée est munie d'une came.
